# DEMANDE DE BREVET EUROPEEN

(11) **EP 1 908 382 A1**
(43) Date de publication de la demande: **09.04.2008**
(21) Numéro de dépôt: 06121815.2
(22) Date de dépôt: 05.10.2006
(51) Int. Cl.: A47J 37/04

(54) **Cartouche alimentaire et dispositif de cuisson mettant en oeuvre une telle cartouche**

(71) Demandeur: TURCO, M. Salvator, 4870 Trooz (BE); Braun, Eric Albert Germain, 4140 Gomzé-Andoumont (BE)
(72) Inventeur: TURCO, Salvator, 4870, Trooz (BE)
(74) Mandataire: Claeys, Pierre

(57) **Abrégé**

Cartouche alimentaire (5), comprenant une broche collectrice (24), un plateau de support (25) qui est fixé sur la broche (24) et sur lequel des tranches (26) ou morceaux d'aliment sont empilés, à l'état embroché sur la broche collectrice (24), des moyens de fixation permettant de relier la cartouche de manière détachable à un moyen d'entraînement en rotation (6), de façon que, à l'état relié, la broche collectrice (24) puisse être entraînée en rotation sur elle-même, et un corps de cartouche (27) présentant une ouverture par laquelle les tranches (26) ou morceaux d'aliment à l'état embroché ont été introduits dans le corps de cartouche et peuvent être retirés de celui-ci, le corps de cartouche (27) étant, dans une position de fermeture, relié de manière détachable audit plateau de support (25) fixé sur la broche, qui ferme ainsi ladite ouverture du corps de cartouche (27), et dispositif mettant en oeuvre une telle cartouche.

## Description

La présente invention est relative à une cartouche contenant un produit alimentaire et à un dispositif mettant en oeuvre une telle cartouche, qui soit utilisable sous la forme d'un appareil ménager que l'on peut disposer sur une table, pour le repas.

On connaît déjà de nombreux appareils ménagers à déposer sur la table à manger et à l'aide desquels les convives peuvent cuire eux-mêmes leur repas. On peut citer notamment des appareils pour fondue bourguignonne, raclette, etc.

On connaît aussi notamment des appareils où l'on peut faire rôtir sur table des brochettes de viande, entraînées en rotation autour d'une résistance chauffante. Les brochettes de viande doivent cependant être préparées à l'avance en cuisine. Il faut enfiler les morceaux de viande sur des broches du dispositif. Celles-ci doivent ensuite être nettoyées avant un nouvel usage. Ce type d'appareil demande donc une manipulation assez complexe et peu hygiénique de morceaux de viande avant de pouvoir mettre en oeuvre l'appareil, ainsi qu'une étape de nettoyage des broches sur lesquelles des résidus de viande surcuits adhèrent généralement fermement. L'appareil comprend un grand nombre de composants détachables, en particulier les broches, ce qui complique le rangement.

On connaît par ailleurs, dans certains établissements de restauration, des appareils à pita qui sont de dimension industrielle et donc inutilisables comme appareil ménager. Le restaurateur dispose d'une longue broche entraînée en rotation devant une source de chaleur et il se procure chez des fabricants spécialisés des emballages de viande de grande dimension à enfiler sur sa broche, celle-ci étant à nettoyer après chaque usage.

La présente invention a pour but de mettre au point un dispositif de cuisson d'aliment à mettre en oeuvre comme appareil ménager à disposer sur une table de repas et une cartouche alimentaire, qui permette un minimum de préparation en cuisine et peu d'entretien après usage.

On résout ce problème suivant l'invention par une cartouche alimentaire, comprenant
- une broche collectrice,
- un plateau de support qui est fixé sur la broche et sur lequel des tranches ou morceaux d'aliment sont empilés, à l'état embroché sur la broche collectrice,
- des moyens de fixation permettant de relier la cartouche de manière détachable à un moyen d'entraînement en rotation, de façon que, à l'état relié, la broche collectrice puisse être entraînée en rotation sur elle-même, et
- un corps de cartouche présentant une ouverture par laquelle les tranches ou morceaux d'aliment à l'état embroché ont été introduits dans le corps de cartouche et peuvent être retirés de celui-ci, le corps de cartouche étant, dans une position de fermeture, relié de manière détachable audit plateau de support fixé sur la broche, qui ferme ladite ouverture du corps de cartouche.

Une telle cartouche, à l'état fermé, représente un emballage pour aliment qui peut être conservé pendant quelques jours à plusieurs mois, selon le mode de fermeture de la cartouche par le plateau de support et la température de l'armoire de stockage utilisée. Cette cartouche peut en effet contenir de la viande fraîche, précuite ou congelée. Elle peut aussi être fermée sous vide ou non.

Dans cette cartouche l'aliment, par exemple de la viande à pita, se trouve déjà à l'état embroché et l'utilisateur n'a donc qu'un minimum de manipulations à faire : ouvrir la cartouche, ôter le corps de cartouche et fixer la broche ou le plateau de support par les moyens de fixation prévus sur un moyen d'entraînement qui se trouve dans un dispositif adéquat prévu sur la table. Après consommation de la viande, la broche munie de son plateau de support peut être jetée.

Les composants de la cartouche, c'est-à-dire le corps de cartouche, la broche et le plateau de support sont donc de préférence à usage unique.

La broche et le plateau de support sont de préférence réalisés en une matière résistant à la chaleur de cuisson de l'aliment. On peut par exemple prévoir pour leur réalisation un matériau métallique léger, par exemple à base d'aluminium, une matière plastique résistant à la chaleur, ou encore un matériau composite du type alu-carton.

Le corps de cartouche peut être réalisé en n'importe quel matériau d'emballage rigide ou souple, transparent ou non, par exemple en carton, métal, film plastique, etc.

Suivant une forme de réalisation avantageuse de l'invention, la cartouche contient une quantité de tranches ou morceaux d'aliment, correspondant à un repas d'une à quatre personnes, en particulier d'une personne.

Par cette conception personnalisée de la cartouche, on peut donc éviter à l'utilisateur de manger plusieurs jours de suite par exemple de la pita, parce que de la viande reste sur la broche.

Lesdites tranches ou morceaux d'aliment sont par exemple à base de viande ou de préparations végétariennes, en particulier des tranches de viande à pita.

D'autres particularités concernant une cartouche alimentaire suivant l'invention sont indiquées dans les revendications annexées.

La présente invention concerne aussi un dispositif de cuisson de table comprenant
- au moins une source de chaleur et
- au moins un moyen d'entraînement en rotation auquel lesdits moyens de fixation d'une cartouche suivant l'invention peuvent être reliés de manière détachable et qui est capable, à l'état relié de la cartouche, d'entraîner la broche collectrice en rotation autour d'elle-même,
- à l'état relié de la cartouche, ladite au moins une source de chaleur s'étendant parallèlement à la broche collectrice débarrassée du corps de cartouche, à une distance appropriée.

Suivant une forme avantageuse de réalisation du dispositif suivant l'invention au moins une source de chaleur est surmontée d'un plateau chauffant, amené à température appropriée par ladite source de chaleur sous-jacente, et prévu pour chauffer ou cuire différents aliments ou condiments, par exemple un pain à pita, de la sauce, des dés de légumes, etc.

D'autres particularités du dispositif suivant l'invention sont indiquées dans les revendications annexées.

D'autres détails et particularités de l'invention ressortiront de la description donnée ci-après, d'exemples de réalisation non limitatifs de la cartouche et du dispositif suivant l'invention, avec référence aux dessins annexés.
La figure 1 représente une vue en perspective, partiellement brisée, d'un dispositif de table suivant l'invention.
La figure 2 représente une vue partiellement en coupe d'une cartouche alimentaire suivant l'invention.
La figure 3 représente une vue en coupe, partiellement brisée, d'une variante de cartouche alimentaire suivant l'invention.
La figure 4 représente une vue en coupe partielle du socle d'un dispositif suivant l'invention.

Sur les différentes figures, les éléments identiques ou analogues sont désignés par les mêmes références.

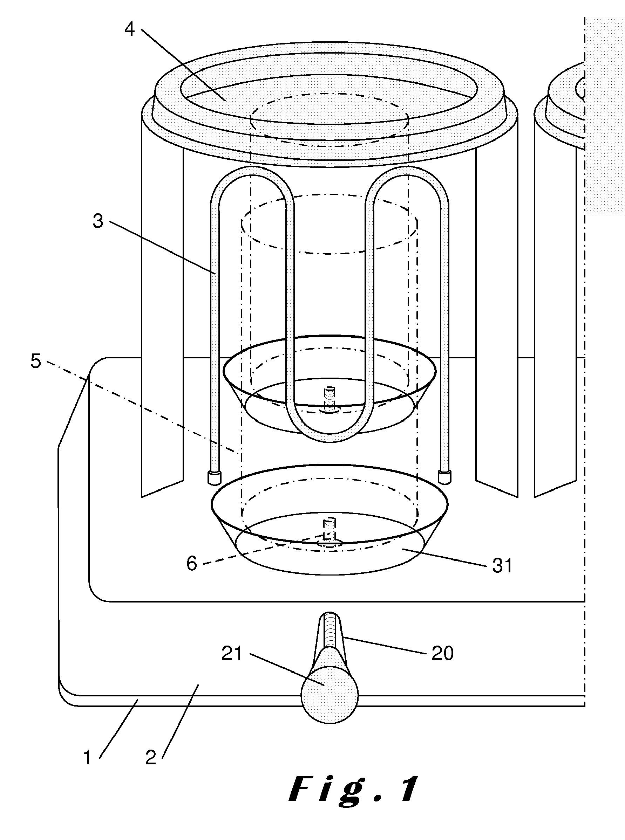

Sur la figure 1, on a illustré un dispositif de cuisson de table. Ce dispositif comprend une plaque de base 1 surmontée d'un couvercle 2 qui cache le mécanisme du dispositif. Le couvercle 2 supporte au moins une source de chaleur qui consiste ici en une résistance électrique 3 capable d'émettre un rayonnement IR et qui peut être alimentée en courant par un circuit électrique usuel, connu en soi. Dans l'exemple illustré, cette source de chaleur est surmontée d'un plateau 4 en une matière susceptible d'être chauffée par la résistance 3, lorsque celle-ci est en service. Comme on peut le voir sur la figure 1, la résistance chauffante 3 s'étend avantageusement verticalement vers le haut, en formant éventuellement une ou plusieurs boucles.

Sur la figure 1, on a représenté en traits interrompus une cartouche alimentaire 5 qui peut être reliée à un moyen d'entraînement en rotation. Dans cet exemple de réalisation celui-ci consiste en un axe fileté 6 qui fait saillie verticalement au travers du couvercle 2, en passant par une fente allongée 7. Cette fente est agencée de manière à présenter une extrémité rapprochée de la résistance 3 et une extrémité éloignée de celle-ci.

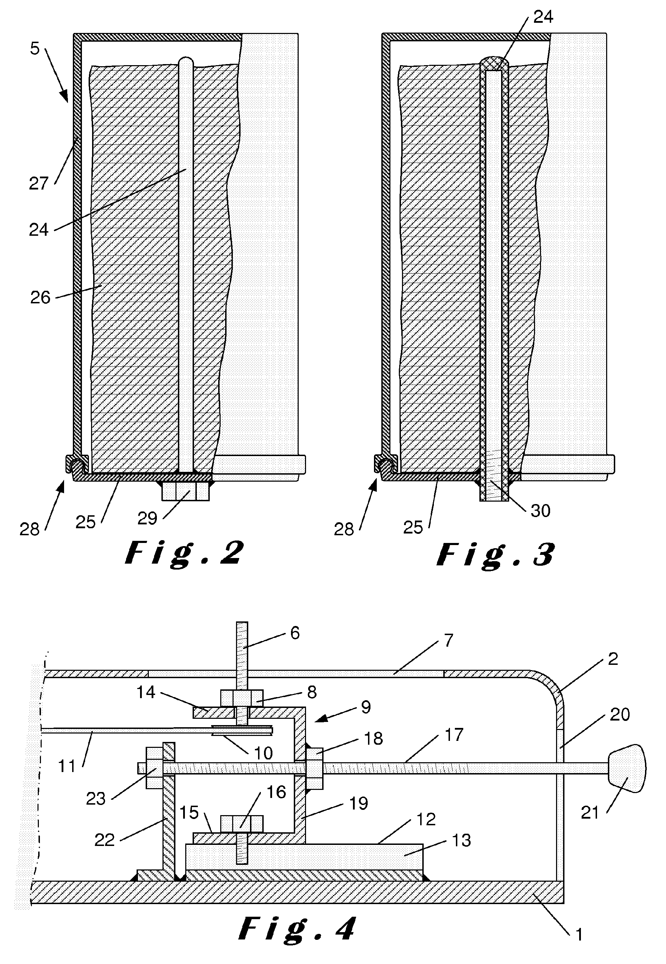

Ainsi qu'il ressort de la figure 4, dans cet exemple de réalisation l'axe 6 est, à l'aide d'un écrou 8, supporté sur une branche horizontale 14 d'un profilé en U 9, de manière à pouvoir pivoter par rapport à cette branche. L'axe 6 traverse le profilé 9 et est pourvu à son extrémité inférieure d'une poulie 10 qui peut être entraînée en rotation avec l'axe par une courroie 11 reliée de manière usuelle à un moteur d'entraînement non représenté.

Dans l'exemple de la figure 4, le profilé 9 est, par sa branche horizontale 15, en appui sur un socle 12 relié de manière fixe à la plaque de base 1. Ce socle 12 présente une fente longitudinale 13 parallèle à la fente allongée 7 du couvercle 2. La branche 15 du profilé est percée d'une ouverture dans laquelle peut être fixé un boulon 16, dont l'extrémité libre fait saillie dans la fente 13. De cette manière, le profilé 9 peut être amené à coulisser vers la résistance 3 ou loin de celle-ci, en étant guidée par l'axe 6 dans la fente allongée 7 et le boulon 16 dans la fente longitudinale 13.

Dans l'exemple de la figure 4, une tige filetée 17 est vissée dans un écrou 18 fixé sur l'âme 19 du profilé 9, de manière à passer à travers cette âme en étant disposée parallèlement aux fentes 7 et 13. Cette tige filetée 17 fait saillie hors du couvercle 2, du côté frontal de celui-ci, par une ouverture 20. A l'extrémité de la tige 17 on peut prévoir un bouton de manoeuvre 21. L'extrémité opposée de la tige 17 passe à travers une cornière 22 par laquelle elle est bloquée axialement à l'aide d'un écrou 23. Lorsqu'on fait tourner la tige filetée on provoque ainsi un coulissement du profilé 9 parallèlement aux fentes 7 et 13, et donc un déplacement dans la même direction de l'axe fileté 6. Cette opération permet donc de rapprocher ou d'éloigner de la résistance 3 la cartouche 5 fixée sur l'axe 6, et d'ajuster ainsi une distance appropriée entre résistance et cartouche.

Sur la figure 2, on a illustré une cartouche alimentaire suivant l'invention. Cette cartouche comprend une broche collectrice 24 munie d'un plateau de support 25. Des tranches 26, par exemple de viande à pita, sont embrochées sur la broche 24 et empilées ainsi sur le plateau 25. La cartouche comprend en outre un corps de cartouche 27 dans lequel les tranches 26 à l'état embroché sur la broche 24 pourvue du plateau 25 sont introduites par l'intermédiaire d'une ouverture. Le corps de cartouche 27 est amené en position de fermeture de cette ouverture par le plateau 25. Le corps de cartouche 27 et le plateau 25 présentent des moyens de liaison réciproque détachables 28, courants en soi. Dans cette position de fermeture, la préparation de viande ou de matière végétarienne peut être conservée pendant quelques jours ou davantage dans un réfrigérateur ou même un congélateur. On peut prévoir que ces moyens de liaison réciproque permettent une fermeture du corps de cartouche sous vide.

La broche 24 et le plateau de support 25 sont réalisés en une matière résistant à la chaleur de cuisson de l'aliment, par exemple en aluminium. Le corps de cartouche 27 peut être en n'importe quelle matière d'emballage alimentaire appropriée. Après usage, tous ces composants sont jetables.

Dans l'exemple de réalisation illustré sur la figure 2, la broche 24 est soudée sur une face du plateau de support 25, tandis que sur la face opposée est fixé un écrou 29 par lequel il sera possible de fixer la cartouche sur l'axe fileté 6.

Dans l'exemple de réalisation illustré sur la figure 3, la broche 24 traverse le plateau de support 25. Elle présente dans ce cas une cavité taraudée 30 dans laquelle peut s'engager l'axe fileté 6.

D'autres moyens de fixation détachables peuvent évidemment être prévus pour autant qu'ils soient accessibles de l'extérieur, en position fermée de la cartouche.

Il doit être entendu que la présente invention n'est en aucune façon limitée aux formes de réalisation décrites ci-dessus et que bien des modifications peuvent y être apportées sans sortir du cadre des revendications annexées.

On peut par exemple prévoir un dispositif suivant l'invention pour une ou plusieurs personnes. Une seule résistance peut suffire pour chauffer l'aliment de deux cartouches ou plus, c'est-à-dire que plusieurs broches peuvent être fixées sur le dispositif de manière à tourner sur elles-mêmes en face de la même résistance.

On peut aussi envisager d'enfiler sur l'axe 6 une coupe 31 destinée à recevoir le bas de la cartouche lorsqu'on fixe celle-ci sur l'axe.

## Revendications

1. Cartouche alimentaire (5), comprenant
- une broche collectrice (24),
- un plateau de support (25) qui est fixé sur la broche (24) et sur lequel des tranches (26) ou morceaux d'aliment sont empilés, à l'état embroché sur la broche collectrice (24),
- des moyens de fixation permettant de relier la cartouche de manière détachable à un moyen d'entraînement en rotation (6), de façon que, à l'état relié, la broche collectrice (24) puisse être entraînée en rotation sur elle-même, et
- un corps de cartouche (27) présentant une ouverture par laquelle les tranches (26) ou morceaux d'aliment à l'état embroché ont été introduits dans le corps de cartouche et peuvent être retirés de celui-ci, le corps de cartouche (27) étant, dans une position de fermeture, relié de manière détachable audit plateau de support (25) fixé sur la broche, qui ferme ainsi ladite ouverture du corps de cartouche (27).

2. Cartouche suivant la revendication 1, dans laquelle la broche (24) et le plateau de support (25) sont réalisés en une matière résistant à la chaleur de cuisson de l'aliment.

3. Cartouche suivant l'une des revendications 1 et 2, **caractérisée en ce qu'**elle est formée de composants à usage unique.

4. Cartouche suivant l'une des revendications 1 à 3, **caractérisée en ce que** lesdits moyens de fixation détachables sont prévus à une extrémité de la broche (24) accessible de l'extérieur, dans ladite position de fermeture.

5. Cartouche suivant la revendication 4, **caractérisée en ce que** ladite extrémité de la broche (24) fait saillie hors de la cartouche (5), à travers ledit plateau de support (25).

6. Cartouche suivant la revendication 4, **caractérisée en ce que** lesdits moyens de fixation détachables sont agencés dans une cavité axiale (29) de ladite extrémité de la broche et **en ce que** le plateau de support (25) fixé à cette extrémité est percé d'un orifice permettant un accès de l'extérieur à cette cavité axiale.

7. Cartouche suivant l'une des revendications 1 à 3, **caractérisée en ce que** lesdits moyens de fixation détachables sont prévus sur une face extérieure du plateau de support (25).

8. Cartouche suivant l'une des revendications 1 à 7, **caractérisée en ce qu'**elle contient une quantité de tranches ou morceaux d'aliment, correspondant à un repas d'une à quatre personnes, en particulier d'une personne.

9. Cartouche suivant l'une quelconque des revendications 1 à 8, **caractérisée en ce que** lesdites tranches ou morceaux d'aliment sont à base de viande ou de préparations végétariennes, en particulier des tranches de viande à pita.

10. Dispositif de cuisson de table, comprenant
- au moins une source de chaleur (3) et
- au moins un moyen d'entraînement (6) en rotation auquel lesdits moyens de fixation d'une cartouche (5) suivant l'une quelconque des revendications 1 à 9 peuvent être reliés de manière détachable et qui est capable, à l'état relié de la cartouche, d'entraîner la broche collectrice (24) en rotation autour d'elle-même,
- à l'état relié de la cartouche, ladite au moins une source de chaleur (3) s'étendant parallèlement à la broche collectrice (24) débarrassée du corps de cartouche (27), à une distance appropriée.

11. Dispositif suivant la revendication 10, **caractérisé en ce que** ladite au moins une source de chaleur (3) est une résistance chauffante émettant un rayonnement IR.

12. Dispositif suivant l'une des revendications 10 et 11, **caractérisé en ce qu'**au moins une source de chaleur est surmontée d'un plateau (4) chauffant, amené à température appropriée par ladite source de chaleur sous-jacente, et prévu pour chauffer ou cuire différents aliments.

13. Dispositif suivant l'une quelconque des revendications 10 à 12, **caractérisé en ce qu'**il comprend des moyens d'ajustement de ladite distance entre la source de chaleur (3) et la broche collectrice (24).

14. Dispositif suivant l'une quelconque des revendications 10 à 13, dans lequel sont entraînés en rotation des broches supportant chacune une quantité de tranches ou morceaux d'aliment correspondant à un repas d'une à quatre personnes, en particulier d'une personne.

15. Dispositif suivant l'une quelconque des revendications 10 à 14, dans lequel on fait usage de cartouches (5) contenant des tranches ou morceaux de viande ou de préparations végétariennes, en particulier de viande à pita.
